Europäisches Patentamt

European Patent Office

Office européen des brevets

(19)

(11) Veröffentlichungsnummer: **0 246 511**
**A2**

(12) ## EUROPÄISCHE PATENTANMELDUNG

(21) Anmeldenummer: 87106691.6

(22) Anmeldetag: 08.05.87

(51) Int. Cl.³: **F 16 H 3/66**

(30) Priorität: 16.05.86 DE 3616701

(43) Veröffentlichungstag der Anmeldung:
25.11.87 Patentblatt 87/48

(84) Benannte Vertragsstaaten:
AT BE DE FR IT

(71) Anmelder: GETRAG Getriebe- und Zahnradfabrik GmbH
Postfach 449 Solitudeallee 24
D-7140 Ludwigsburg(DE)

(72) Erfinder: Rack, Monika
Hauffstrasse 4
D-7145 Markgröningen(DE)

(74) Vertreter: Witte, Alexander, Dr.
Schickhardtstrasse 24
D-7000 Stuttgart 1(DE)

(54) Planetengetriebe.

(57) 1. Planetengetriebe

2.1. Planetengetriebe mit einem Ravigneaux-Planetensatz bieten zwar die Möglichkeit, eine Drehrichtungs-Umkehr zwischen Eingangs- und Ausgangswelle zu erzielen, sind jedoch hinsichtlich der realisierbaren Übersetzungsverhältnesse beschränkt. Insbesondere bei der Anwendung eines solchen Ravigneaux-Planetensatzes in einem Lastschalt-Wendegetriebe besteht keine Möglichkeit, im Rückwärtsgang das Übersetzungsverhältnis $i=-1$ zu realisieren.

2.2. Nach der Erfindung hat das bei einem Ravigneaux-Planetensatz vorhandene lange Planetenrad (5) zwei Abschnitte (53, 56) unterschiedlichen Durchmessers, von denen der eine Abschnitt (53) mit dem einen Zentralrad (3) und der andere Abschnitt (56) mit dem kurzen Planetenrad (6) in Eingriff steht, der dem zweiten Zentralrad (4) zugeordnet ist. Insbesondere ermöglicht es eine solche Anordnung, die Zähnezahl des zweiten Abschnittes (56) des langen Planetenrades (5) zur Zähnezahl des zweiten Sonnenrades (4) in das gleiche Verhältnis zu bringen wie die Zähnezahl des ersten Abschnittes (53) zur Zähnezahl des ersten Sonnenrades (3). Damit läßt sich bei einem Wendegetriebe für den Rückwärtsgang das Übersetzungsverhältnis $i=-1$ erzielen.

EP 0 246 511 A2

Fig. 1

Anmelderin:
Firma
GETRAG Getriebe- und
Zahnradfabrik GmbH
Solitudeallee 24
7140 Ludwigsburg

Vertreter:
Kohler-Schwindling-Späth
Patentanwälte
Hohentwielstraße 41
7000 Stuttgart 1

Stuttgart, den 07.05.1987
P 5103 EP

## Planetengetriebe

Die Erfindung betrifft ein Planetengetriebe mit mindestens zwei gleichachsig nebeneinander angeordneten Zentralrädern und mit mindestens einem in einem gemeinsamen Steg gelagerten Zwillingsplanetensatz, der ein kurzes und ein langes Plantenrad umfaßt, von denen das kurze Planetenrad im wesentlichen die gleiche Breite hat wie das zugeordnete zweite Zentralrad, mit dem es in Eingriff steht, wogegen das lange Planetenrad, daß mit dem ersten der beiden Zentralräder in Eingriff steht, axial bis über das zweite Zentralrad reicht und dort mit dem kurzen Planetenrad in Eingriff steht.

Planetengetriebe dieser Art sind allgemein unter der Bezeichnung Ravigneaux-Planetensatz bekannt. Dabei kann das Planetengetriebe als Zentralräder entweder nur Sonnenräder oder nur Hohlräder aufweisen, aber auch sowohl mit Sonnenrädern als auch Hohlrädern versehen sein. Durch Verbinden unterschiedlicher Getriebeelemente miteinander und/oder mit ortsfesten Gehäuseteilen lassen sich mit einem solchen Planetengetriebe unterschiedliche Übersetzungsverhältnisse und/oder eine Kopplung zwischen den verschiedenen, die einzelnen Getriebeteile tragenden Wellen herstellen.

Obwohl ein solches Planetengetriebe grundsätzlich viele Möglichkeiten bietet, ist seine Konstruktion auch erheblichen Beschränkungen unterworfen, weil bei der Wahl der Verhältnisse der Zähnezahlen bestimmte Bedingungen eingehalten und außerdem die Zahnräder auf engem Raum in einer Weise untergebracht werden müssen, daß sie sich nicht gegenseitig stören. Eine besonders schwerwiegende Bedingung ist bei diesem Getriebetyp dadurch gegeben, daß das lange Planetenrad nicht mit dem ersten Zentralrad in Eingriff kommen darf, so daß also das erste Zentralrad einen vom zweiten Zentralrad abweichenden Durchmesser haben muß.

Eine sehr vorteilhafte Anwendung finden solche Ravigneaux-Planetensätze bei Lastschalt-Wendegetrieben, wie sie aus dem DE-GM 72 10 717 und der DD-PS 24 712 bekannt sind. Obwohl diese Wendegetriebe einen relativ einfachen Aufbau haben, weil sie als Zentralräder lediglich Sonnenräder aufweisen und keine Hohlräder vorhanden sind, führen die vorstehend beschriebenen Beschränkungen dazu, daß bei dem Getriebe nach der DD-PS 24 712 wegen der notwendigen Durchmesserunterschiede der beiden Sonnenräder für den Rückwärtsgang nur ein von i = -1 verschiedenes Übersetzungsverhältnis möglich ist, so daß beim Umschalten in den Vorwärtsgang, bei dem durch starres Verbinden der Wellen das Übersetzungsverhältnis i = 1 realisiert wird, eine Änderung des Übersetzungsverhältnisses eintritt. Eine solche Änderung des Übersetzungsverhältnisses mag zwar bei einem Bootsgetriebe vertretbar sein, ist jedoch bei Wendegetrieben für Landfahrzeuge häufig nicht annehmbar, wie beispielsweise bei selbstfahrenden Arbeitsgeräten, für die im Vorwärts- und Rückwärtsgang genau die gleichen Betriebsbedingungen gelten sollen. Zwar zeigt das DE-GM 72 10 717 ein Wendegetriebe, bei dem im Vorwärtsgang und Rückwärtsgang das gleiche Übersetzungsverhältnis i = 1 herrscht, jedoch besteht bei diesem bekannten Getriebe der Zwillingsplanetensatz nicht aus einem langen und einem kurzen Planetenrad, sondern aus zwei gleichen Planetenrädern, die mit gleichen Sonnenrädern in Eingriff stehen, einseitig über das zugeordnete Sonnenrad überstehen und sich in einem zwischen den beiden Sonnenrädern freigelassenen Raum treffen, wo sie miteinander in Eingriff stehen. Hierdurch wird eine Verlängerung des Getriebes um eine ganze Zahnradbreite erforderlich, die den Einsatz eines solchen Wendegetriebes in Fahrzeugen mit ihrem geringen Raumangebot unmöglich machen kann.

Der Erfindung liegt demnach die Aufgabe zugrunde, ein Planetengetriebe der eingangs genannten Art so weiterzubilden, daß trotz der schwierigen Randbedingungen eine größere Vielfalt von Übersetzungsverhältnissen möglich wird und insbesondere auch bei Wendegetrieben daß Übersetzungsverhältnis i = -1 realisierbar ist, ohne daß dazu die Baulänge des Getriebes vergrößert werden müßte.

Diese Aufgabe wird nach der Erfindung dadurch gelöst, daß die mit dem ersten Zentralrad und mit dem kurzen Planetenrad in Eingriff stehenden Abschnitte des langen Planetenrades unterschiedliche Durchmesser haben.

Während also bei den bekannten Planetengetrieben der beschriebenen Art die nebeneinander angeordneten Zentralräder unterschiedliche Durchmesser haben müssen, damit das lange Planetenrad nur mit einem dieser beiden Zentralräder in Eingriff steht, wird durch die erfindungsgemäße Stufung des langen Planetenrades diese Beschränkung beseitigt. Der Konstrukteur kann die Durchmesser der beiden Abschnitte des langen Planetenrades und demgemäß auch der zugeordneten Zentralräder in sehr viel weiteren Grenzen frei wählen als es bisher möglich war. Während bisher beispielsweise bei der Ausbildung von Zentralrädern als Sonnenräder das Verhältnis der Zähnezahlen von langem Planetenrad zum ersten Sonnenrad stets größer war als das Verhältnis der Zähnezahlen vom langen Planetenrad zum zweiten Sonnenrad, weil das zweite Sonnenrad einen kleineren Durchmesser haben mußte als das erste Sonnenrad, können jetzt bei entsprechender Verminderung des dem zweiten Sonnenrad zugeordneten Abschnittes des langen Planetenrades, gegebenenfalls in Verbindung mit einer entsprechenden Vergrößerung des Durchmessers und damit der Zähnezahl des zweiten Sonnenrades, ohne weiteres Übersetzungsverhältnisse zwischen dem zweiten Abschnitt des langen Planetenrades und dem zweiten Sonnenrad erzielt werden, die gleich und sogar größer sind als die Übersetzungsverhältnisse zwischen dem ersten Abschnitt des langen Planetenrades und dem ersten Sonnenrad.

Diese vorteilhaften Eigenschaften des erfindungsgemäßen Planetengetriebes machen es daher auch besonders dazu geeignet, als Wendegetriebe mit einem wahlweise mit einem der Zentralräder oder einem ortsfesten Gehäuseteil starr verbindbaren Steg ausgebildet zu werden, bei dem dann ohne Vergrößerung der axialen Baulänge für den Rückwärtsgang das Übersetzungsverhältnis i = -1 erzielbar ist. Daher besteht eine besonders bevorzugte Ausgestaltung der Erfindung in einem Lastschalt-Wendegetriebe, bei dem der Steg mit der das eine Sonnenrad tragenden Welle bzw. dem Getriebegehäuse durch eine hydraulisch betätigbare Reibungskupplung verbindbar ist und zu diesem Zweck mit einer die Planetenräder umgebenden Trommel versehen ist, die an der Außenseite ihrer Mantelfläche axial hintereinander angeordnete Sätze von Kupplungslamellen trägt, von denen jeder mit einem Satz im Getriebegehäuse gehaltener bzw. einem Satz mit der Welle verbundener Kupplungslamellen zusammenwirkt, und bei dem weiterhin zur Betätigung der Reibungskupplung dienende hydraulische Kolben zusammen mit den zugeordneten Kupplungslamellen in im wesentlichen spiegelsymmetrischen, zylindrischen Kupplungsgehäusen angeordnet sind, von denen das eine in das Getriebegehäuse eingesetzt und das andere an der einen Welle befestigt ist.

Bei dieser Ausführungsform der Erfindung wird der durch die erfindungsgemäße Stufung des langen Planetenrades erzielte Platzgewinn in Achsrichtung des Getriebes noch durch die besondere Anordnung der Reibungskupplungen an der Mantelfläche einer den Steg umgebenden Trommel unterstützt. Die symmetrische Ausbildung der Kupplungsgehäuse führt dabei zu einem insgesamt weitgehend symmetrischen Getriebeaufbau, der nicht nur fertigungstechnisch, sondern auch für eine sehr gleichmäßige Kraftübertragung günstig ist. Dabei kann der Steg des Getriebes zweckmäßig mit der Eingangswelle kraftschlüssig verbindbar sein, während das zweite Sonnenrad, mit
dem das kurze Planetenrad in Eingriff steht, auf der Ausgangswelle angeordnet ist.

Die Erfindung wird im folgenden anhand des in der Zeichnung
dargestellten Ausführungsbeispieles näher beschrieben und
erläutert. Die der Beschreibung und der Zeichnung zu entnehmenden Merkmale können bei anderen Ausführungsformen der
Erfindung einzeln für sich oder zu mehreren in beliebiger
Kombination Anwendung finden. Es zeigen

Fig. 1    einen Längsschnitt durch ein Lastschalt-Wendegetriebe nach der Erfindung und

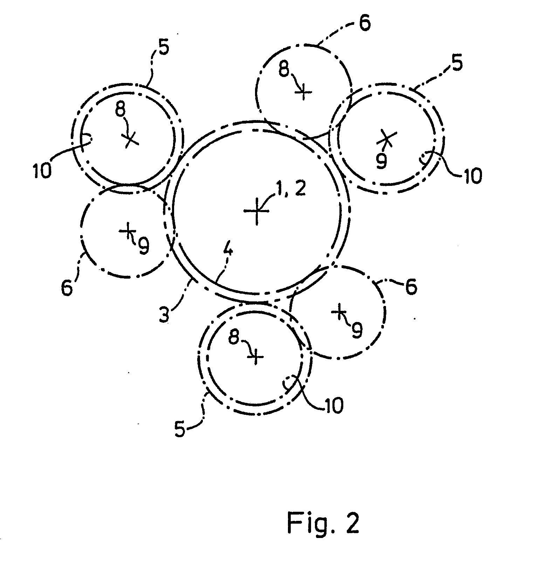

Fig. 2    eine schematische Darstellung des Eingriffes der
          Zahnräder des Wendegetriebes nach Fig. 1.

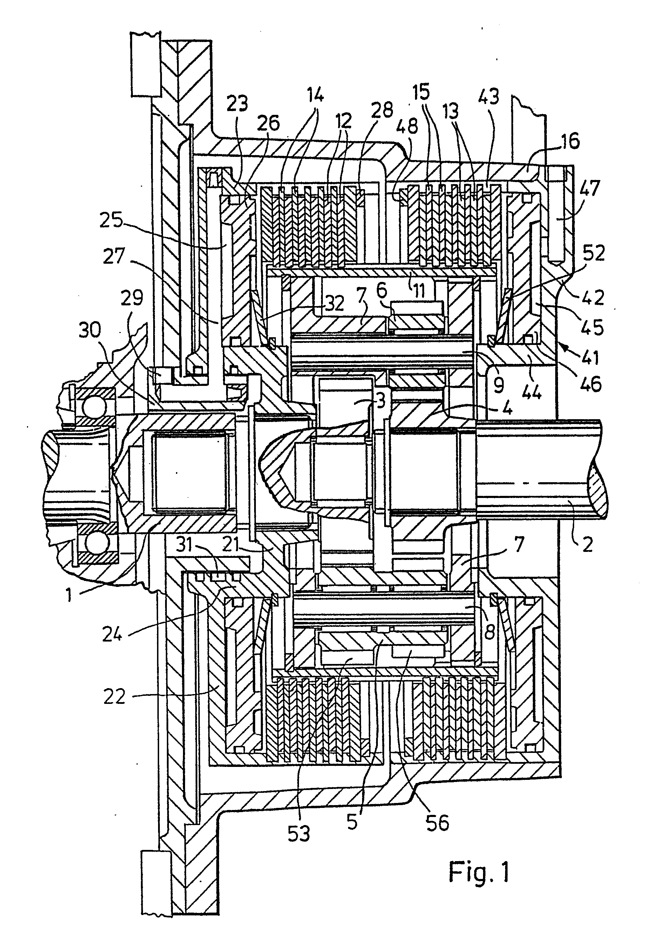

Das in Fig. 1 dargestellte Lastschalt-Wendegetriebe weist
eine Eingangswelle 1 und eine Ausgangswelle 2 auf, die
miteinander fluchten und an ihren einander zugewandten Enden
jeweil ein Zahnrad 3 bzw. 4 tragen. Diese Zahnräder 3, 4
sind die Sonnenräder eines Planetengetriebes, dessen Planetenräder 5, 6 ein Planetenzwillingssatz bilden und in einem
gemeinsamen Steg 7 auf Achsen 8, 9 drehbar gelagert sind,
die derart im Winkel gegeneinander versetzt sind, daß diese
beiden Planetenräder, wie es für einen Planetenzwillingsatz
typisch ist, auch miteinander in Eingriff stehen. Dabei ist
das Planetenrad 5, daß mit dem auf der Eingangswelle 1
sitzenden ersten Sonnenrad 3 in Eingriff steht, als langes
Planetenrad ausgebildet, daß sich bis über das auf der
Ausgangswelle 2 sitzende, zweite Planetenrad 4 erstreckt.

Dagegen ist das mit dem zweiten Sonnenrad 4 in Eingriff
stehende Planetenrad 6 ein kurzes Planetenrad, dessen axiale
Länge etwa auf die Breite des zweiten Sonnenrades 4 beschränkt ist. Der Durchmesser des zweiten Sonnenrades 4 ist
so weit vermindert, daß der dem zweiten Sonnenrad 4 gegenüberstehende Abschnitt 56 nicht mit diesem Sonnenrad,
sondern ausschließlich mit dem kurzen Planetenrad 6 in
Eingriff steht. Dabei ist auch der mit diesem zweiten
Planetenrad 6 in Eingriff stehende Abschnitt 56 des langen
Planetenrades 5 gegenüber dem mit dem ersten Planetenrad 3
in Eingriff stehenden Abschnitt 53 im Durchmesser vermindert. Durch die Verwendung verschiedener Durchmesser für
die beiden Abschnitte 53 und 56 des langen Planetenrades 5
ist es möglich, den Durchmesser des zweiten Sonnenrades 4
weniger zu vermindern als es notwendig gewesen wäre, wenn
das lange Planetenrad 5 einen konstanten Durchmesser gehabt
hätte. Es bestünde sogar die Möglichkeit, das zweite
Planetenrad 4 mit dem gleichen oder sogar einem größeren
Durchmesser auszubilden als das erste Planetenrad 3, wenn
der Durchmesser des zweiten Abschnittes 56 des langen
Planetenrades 5 entsprechend vermindert würde. Daher hat der
Fachmann viele Möglichkeiten, das Übersetzungsverhältnis
zwischen dem zweiten Abschnitt 56 des langen Planetenrades 5
und dem zweiten Sonnenrad 4 unabhängig von dem Übersetzungsverhältnis zwischen dem ersten Abschnit 53 des langen
Planetenrades 5 und dem ersten Sonnenrad 3 zu wählen. Bei
dem dargestellten Ausführungsbeispiel sind die Durchmesser
und damit die Zähnezahlen des zweiten Abschnittes 56 des
langen Planetenrades und des zweiten Sonnenrades 4 so gewählt, daß dieses Zahnradpaar das gleiche Übersetzungsverhältnis ergibt wie der erste Abschnitt 53 des langen
Planetenrades 5 und das erste Sonnenrad 3. Damit besteht

der Welle 2 bei festgehaltenem Steg 7 ein Übersetzungsverhältnis von i = - 1.

Der Steg 7 des Getriebes ist mit einer die Planetenräder
umgebenden Trommel 11 versehen die an ihrer Außenseite mit
zwei Sätzen ringscheibenförmiger Kupplungslamellen 12 bzw.
13 versehen ist. Diese Kupplungslamellen sind mit der
Trommel 11 und infolgedessen mit dem Steg 7 drehfest, aber
in Axialrichtung verschieblich verbunden. Diese Kupplungslamellen wirken mit zwei weiteren Sätzen von Kupplungslamellen
14 bzw. 15 zusammen, von denen der erste mit der Eingangswelle 1 und der zweite mit einem die Anordnung umgebenden
Getriebsgehäuse 16 drehfest, aber ebenfalls wieder in Axialrichtung des Getriebes verschieblich verbunden ist.

Die der Eingangswelle 1 zugeordneten Kupplungslamellen 14
sind in einem Kupplungsgehäuse 21 angeordnet, das auf der
Antriebswelle 1 dicht neben dem Sonnenrad 3 befestigt ist
und eine zur Achse der Eingangswelle 1 senkrechte, scheibenförmige Wand 22 aufweist, die an ihrem äußeren Rand mit
einem Kranz 23 versehen ist, in dem die Kupplungslamellen 14
unverdrehbar aber in Axialrichtung verschieblich angeordnet
sind. Zwischen diesem Kranz 23 und dem Nabenteil 24 befindet
sich ein ringförmiger Raum 25, in dem ein ringförmiger
Kolben 26 in Axialrichtung des Getriebes verschieblich und
zugleich gegenüber dem Kupplungsgehäuse 21 abgedichtet
gelagert ist. Daher bildet der ringförmige Raum 25 eine
Kammer, über die durch eine Radialbohrung 27 ein Druckmedium, insbesondere Hydrauliköl, eingeleitet werden kann,
um den Kolben 26 gegen die von den Kupplungslamellen 12, 14
gebildete Reibungskupplung zu drücken. Das Paket der
Kupplungslamellen 12, 14 stützt sich an der dem Kolben 26 abgewandten Seite an einem in den Kranz 23 eingesetzten
Anschlagring 28 ab. Die Radialbohrung 27 steht mit einem
Druckmittel-Einlaß 29, der sich in einem Gehäuseteil 30
befindet, über eine Ringnut 31 auch bei mit der Eingangswelle 1 rotierendem Kupplungsgehäuse 21 in Verbindung. Es
ist demnach ersichtlich, daß durch Beaufschlagen des Kolbens
26 mit Hydrauliköl der Kolben 26 einen Reibungsschluß
zwischen den Kupplungslamellen 12, 14 herstellt und dadurch
den Steg 7 mit der Eingangswelle 1 verbindet. Wenn der Steg
7 mit der Eingangswelle 1 umläuft, führen die Planetenräder
5, 6, die formschlüssig miteinander in Eingriff stehen,
keine Drehung um ihre Achsen 8, 9 aus, so daß sie sich auch
nicht auf dem Sonnenrad 4 der Abtriebswelle 2 abwälzen
können, sondern dieses Sonnenrad wiederum starr mit dem Steg
7 koppeln. Demgemäß besteht eine starre Verbindung zwischen
Ausgangswelle 2 und Eingangswelle 1, wenn der Steg 7 mit der
Eingangswelle 1 verbunden ist, was einem Vorwärtsgang mit
dem Übersetzungsverhältnis i = 1 entspricht. Der Kolben 26
ist an der dem Steg 7 zugewandten Seite durch eine in das
Kupplungsgehäuse 21 eingesetzte Tellerfeder 32 belastet, die
den Kolben 26 in seine Ausgangslage zurückbringt, wenn die
an der Rückseite des Kolbens 26 vorhandene Kammer 25 vom
Druckmittel entlastet wird.

Die zur Verbindung des Steges 7 mit dem Gehäuse dienende
Kupplung ist im wesentlichen genauso ausgebildet wie die
soeben beschriebene Kupplung zur Herstellung der Verbindung
mit der Eingangswelle 1. Auch hier ist ein Kupplungsgehäuse
41 vorhanden, das eine scheibenförmige Wand 42 aufweist, die
an ihrem äußeren Rand mit einem Kranz 43 versehen ist, in
dem die Kupplungslamellen 15 unverdrehbar jedoch axial
verschieblich geführt sind. Ein dem Nabenteil 24 entsprechender innerer Kranz 44 begrenzt wiederum zusammen mit dem äußeren Kranz 43 einen ringförmigen Raum 45, in dem sich
ein ringförmiger Kolben 46 befindet. Eine in diesem Fall
nach außen offene Radialbohrung 47 erlaubt wiederum das
Zuführen eines Druckmittels, insbesondere von Hydrauliköl,
zu dem ringförmigen Raum 45, so daß der Kolben 46 unter der
Wirkung dieses Druckmittels an das Paket der Kupplungslamellen 13, 15 angedrückt wird und dieses Paket gegen einen
Anschlagring 48 preßt. Zum Öffnen der Kupplung dient wiederum eine in den inneren Kranz 44 des Kupplungsgehäuses 41
eingesetzte Tellerfeder 52. In diesem Fall ist allerdings
das Kupplungsgehäuse 41 nicht auf einer Welle befestigt,
sondern vielmehr in das Getriebsgehäuse 16 eingesetzt, so
daß diese Kupplung dazu dient, den Steg 7 wahlweise mit dem
Getriebegehäuse 16 zu verbinden.

Ist der Steg mit dem Getriebegehäuse 16 verbunden, so sind
die Achsen 8, 9 gegenüber den Ein- und Ausgangswellen 1, 2
ortsfest. Die darauf angeordneten Planetenräder 5, 6 haben
daher die gleiche Wirkung wie die Zahnräder eines Vorgeleges
mit einem Umkehrrad 6, das einen Antrieb der Ausgangswelle 2
mit zur Eingangswelle 1 entgegengesetzter Drehrichtung, also
ein Übersetzungsverhältnis i = -1 bewirkt.

Wie leicht ersichtlich, ist das dargestellte Getriebe nicht
dazu geeignet, von der Eingangswelle 1 auf die Ausgangswelle
2 ein nennenswertes Drehmoment zu übertragen, wenn der Steg
7 nicht entweder mit der Eingangswelle oder dem Getriebegehäuse drehfest verbunden ist, da, wenn die Planetenräder 5,
6 von der Eingangswelle 1 in Umdrehung versetzt werden, das
kurze Planetenrad 6 auf dem Sonnenrad 4 der Ausgangswelle 2
unter Mitnahme des Steges 7 ohne weiteres abrollen kann,
ohne daß die Ausgangswelle 2 in Umdrehung versetzt wird.

Demgemäß hat das Getriebe bei gelösten Kupplungen eine Neutralstellung, von der aus durch Schließen einer der beiden Kupplungen der Vorwärtsgang oder der Rückwärtsgang eingelegt werden kann. Deshalb eignet sich das bekannte Getriebe auch zugleich als Anfahrkupplung.

Es versteht sich, daß die Erfindung nicht auf das dargestellte Ausführungsbeispiel beschränkt ist, sondern Abweichungen davon möglich sind, ohne den Rahmen der Erfindung zu verlassen. Solche Abweichungen können die spezielle Anordnung der Zahnräder, die spezielle konstruktive Gestaltung des Steges, der Kupplungen und ihrer Betätigungen betreffen. So können beispielsweise statt Reibungskupplungen auch magnetische Kupplungen zur Herstellunng der Verbindungen zur Eingangs- und/oder Ausgangswelle verwendet werden. Grundsätzlich kann die erfindungsgemäße Stufung des langen Planetenrades bei allen Plantetengetrieben vom Ravigneaux-Typ Anwendung finden, unabhängig davon, ob ein solches Planetengetriebe als Zentralräder ausschließlich Sonnenräder, Hohlräder oder beide Typen von Zentralrädern umfaßt. Demnach könnte das dargestellte Getriebe in kinematischer Umkehr auch mit Hohlrädern anstelle von Sonnenrädern und innerhalb einer die Zwillingsplanetensätze tragenden Trommel angeordneten Reibungskupplungen ausgebildet werden. Auch könnten die Kupplungen axial an den Rädersatz anschließen und nicht den Rädersatz koaxial umgebend angeordnet sein. Ferner könnte die Verbindung des Steges mit der Ausgangswelle anstatt mit der Eingangswelle erfolgen und/oder das kurze Planetenrad der Eingangswelle anstatt der Ausgangswelle zugeordnet sein. Angesichts dieser vielen möglichen Varianten wird die in der Zeichnung dargestellte Ausführungsform eines Lastschalt-Wendegetriebes als ein Beispiel für eine optimale Anwendung des erfindungsgemäßen Planetengetriebes angesehen.

Patentansprüche

1. Planetengetriebe mit mindestens zwei gleichachsig
nebeneinander angeordneten Zentralrädern und mit
mindestens einem in einem gemeinsamen Steg gelagerten
Zwillingsplanetensatz, der ein kurzes und ein langes
Planetenrad umfaßt, von denen das kurze Planetenrad im
wesentlichen die gleiche Breite hat wie das zugeordnete zweite Zentralrad, mit dem es in Eingriff
steht, wogegen das lange Planetenrad, das mit dem
ersten der beiden Zentralräder in Eingriff steht,
axial bis über das zweite Zentralrad reicht und dort
mit dem kurzen Planetenrad in Eingriff steht,
dadurch gekennzeichnet, daß die mit dem ersten
Zentralrad (3) und mit dem kurzen Planetenrad (6) in
Eingriff stehenden Abschnitte (53, 56) des langen
Planetenrades (5) unterschiedliche Durchmesser haben.

2. Planetengetriebe nach Anspruch 1, dadurch gekennzeichnet, das die Zentralräder (3, 4) Sonnenräder sind und
daß zweite Zentralrad (4) sowie auch der mit dem kurzen Planetenrad (6) in Eingriff stehende zweite
Abschnitt (56) des langen Planetenrades (5) einen
kleineren Durchmesser haben als das erste Zentralrad
(3) bzw. der mit dem ersten Zentralrad in Eingriff
stehende erste Abschnitt (53) des langen Planetenrades
(5).

3.  Planetengetriebe nach Anspruch 1 oder 2, dadurch
gekennzeichnet, daß das Verhältnis der Zähnezahl des
zweiten Abschnittes (56) des langen Planetenrades (5)
zur Zähnezahl des zweiten Zentralrades (4) gleich dem
Verhältnis der Zähnezahl des ersten Abschnittes (53)
des langen Planetenrades (5) zur Zähnezahl des ersten
Zentralrades (3) ist.

4.  Planetengetriebe nach einem der vorhergehenden Ansprüche, dadurch gekennzeichnet, daß es als Wendegetriebe wahlweise mit einem der Zentralräder (3) oder
einem ortsfesten Gehäuseteil (16) starr verbindbaren
Steg (7) ausgebildet ist.

5.  Planetengetriebe nach den Ansprüchen 2 bis 4 dadurch
gekennzeichnet, daß der Steg (7) mit der das eine
Zentralrad (3) tragenden Welle (1) bzw. dem Getriebegehäuse (16) durch eine hydraulisch betätigbare Reibungskupplung verbindbar und zu diesem Zweck mit einer
die Planetenräder (5, 6) umgebenden Trommel (11)
versehen ist, die an der Außenseite ihrer Mantelfläche
zwei axial hintereinander angeordnete Sätze von Kupplungslamellen (12, 13) trägt, von denen jeder mit
einem Satz im Getriebegehäuse (16) gehaltener bzw.

3                              0246511

einem Satz mit der Welle (1) verbundener Kupplungslamellen (15, 14) zusammenwirkt, und daß der zur Betätigung der Reibungskupplung dienende hydraulische Kolben
(26, 46) zusammen mit den zugeordneten Kupplungslamellen (12, 14 bzw. 13, 15) in im wesentlichen
spiegelsymmetrischen, zylindrischen Kupplungsgehäusen
(21, 24) angeordnet sind, von denen das eine in das
Getriebegehäuse (16) eingesetzt und das andere an der
einen Welle (1) befestigt ist.

Fig. 1

1/2

0246511

0246511

Fig. 2